# EUROPEAN PATENT APPLICATION

(11) **EP 2 881 850 A1**
(43) Date of publication of application: **10.06.2015**
(21) Application number: 13827266.1
(22) Date of filing: 27.06.2013
(51) Int. Cl.: G06F 3/0488

(54) **METHOD AND APPARATUS FOR ADDING TOUCH SCREEN TAPPING EVENT**

(30) Priority: 06.08.2012 CN 201210277278
(71) Applicant: ZTE Corporation, Shenzhen, Guangdong 518057 (CN)
(72) Inventor: LU, Siyun, Shenzhen Guangdong 518057 (CN)
(74) Representative: Gevers Patents
(86) International application number: PCT/CN2013/078235
(87) International publication number: WO 2014/023141

(57) **Abstract**

Provided is a method for adding a click event with respect to a touch screen. A setting mode is entered; upon detection of a click operation on the touch screen, coordinate values are acquired corresponding to all contact points within a clicking region where the click operation is performed; all coordinate values resulted from the click operation are converted into a graphical code, using a preset encoding algorithm; and a key code is set for the graphical code; Further provided is a device for adding a click event with respect to a touch screen.

## Description

### TECHNICAL FIELD

The disclosure relates to touch screen techniques of a terminal, and in particular to a method and device for adding a click event with respect to a touch screen.

### BACKGROUD

At present, in a terminal having a touch screen, a user implements interaction with the terminal through clicking on the touch screen, and specifically, the terminal determines, upon detection of a click operation on the touch screen, a key code of a clicking event corresponding to the click operation; the terminal determines an event to be executed according to the determined key code and a definition of the key code, which is defined by a currently-running application. Specifically, the click event includes a long click, a short click and a slide. The above method for determining a click event with respect to a touch screen includes: when a user clicks on the touch screen, the terminal converts, all touch points resulted from the click and detected by the touch screen, into coordinate values, and extracts a coordinate value corresponding to a midpoint of all of the coordinate values as an operation position of a current click event; the terminal then determines whether the current click event with respect to the touch screen is a long click, a short click or a slide according to a duration, starting position and ending position of the detected click on the touch screen.

However, in the above method for determining a click event, only a midpoint of all of the coordinate values is extracted as an operation position of the click event rather than using all of the coordinate values to identify the click event; as a result, only relatively few click events including a long click, a short click and a slide can be identified by the terminal through the touch screen. Furthermore, since only relatively few click events can be identified by the terminal through the touch screen, it is complicated to operate through the touch screen, thereby affecting convenience of touch screen operations and operation experiences for a user using the touch screen.

It can be seen that in the related art, not all of the coordinate values are used to identify a click event, which results in a problem that only relatively few click events can be identified through the touch screen, and further results in a problem that it is complicated to operate through the touch screen, thereby affecting convenience of touch screen operations and operation experiences for a user using the touch screen.

### SUMMARY

In view of the above, various embodiments of the disclosure are intended to provide a method and device for adding a click event with respect to a touch screen, which can simplify operations performed through the touch screen by adding a click event to be identified by a terminal through the touch screen, and can then improve convenience of operating the terminal through the touch screen and improve operation experiences for a user using the touch screen.

The embodiments of the disclosure are implemented as follows.

An embodiment of the disclosure provides a method for adding a click event with respect to a touch screen, and the method includes: a setting mode is entered; upon detection of a click operation on the touch screen, coordinate values are acquired corresponding to all contact points within a clicking region where the click operation is performed; all coordinate values resulted from the click operation are converted into a graphical code, using a preset encoding algorithm; and a key code is set for the graphical code.

In an embodiment, the step that all coordinate values resulted from the click operation are converted into a graphical code may include: all of the acquired coordinate values corresponding to the all contact points within the clicking region where the click operation is performed are encoded, using the preset encoding algorithm, as a matrix, and the matrix is taken as the graphical code.

In an embodiment, the step that a key code is set for the graphical code may include: it is determined whether the graphical code already exists; it is determined whether the key code of the graphical code is to be reset when the graphical code already exists; a key code is set for the graphical code and the key code is saved when the key code of the graphical code is to be reset; otherwise, the process is ended; or a key code is directly set for the graphical code and the key code is saved when the graphical code is a new one.

In an embodiment, after the step that a key code is set for the graphical code, it is determined whether there is another click event with respect to the touch screen to be added; if yes, the setting mode is re-entered; otherwise, the setting mode is exited and an operation is performed by taking account of the added click event.

In an embodiment, the step that an operation is performed by taking account of the added click event may include: it is detected in real time whether there is a subsequent click operation on the touch screen; upon detection of the subsequent click operation on the touch screen, coordinate values are acquired corresponding to all contact points within a clicking region where the subsequent click operation is performed; all coordinate values resulted from the subsequent click operation are converted into a graphical code, using the preset encoding algorithm; and an event to be executed is determined according to the key code corresponding to the graphical code.

In an embodiment, the step that an event to be executed is determined according to the key code corresponding to the graphical code may include: it is checked whether the graphical code already exists; the event to be executed is determined according to the key code corresponding to the graphical code when the graphical code already exists; or otherwise, a coordinate value corresponding to a midpoint of all of the coordinate values resulted from the subsequent click operation is extracted as an operation position of the subsequent click operation, a current click event corresponding to the subsequent click operation is determined according to a duration, starting position and ending position of the detected click operation on the touch screen, and the event to be executed is determined according to an key code corresponding to the current click event.

Another embodiment of the disclosure further provides a device for adding a click event with respect to a touch screen of a terminal, and the device includes a control module and an encoding module, wherein the control module is configured to enter a setting mode, acquire, upon detection of a click operation on the touch screen of the terminal, coordinate values corresponding to all contact points within a clicking region where the click operation is performed, transmits all coordinate values resulted from the click operation to the encoding module, and set a key code for a graphical code returned from the encoding module; and the encoding module is configured to convert, the all coordinate values from the control module into the graphical code, using a preset encoding algorithm, and return the graphical code to the control module.

In an embodiment, the encoding module may be configured to encode, using the preset encoding algorithm, all of the coordinate values, from the control module, corresponding to the all contact points within the clicking region where the click operation is performed as a matrix, and take the matrix as the graphical code.

In an embodiment, the control module may be configured to determine, after receiving the graphical code returned from the encoding module during the setting mode, whether the graphical code already exists, determine whether the key code of the graphical code is to be reset when the graphical code already exists, set a key code for the graphical code and save the key code when the key code of the graphical code is to be reset; otherwise, end the process; or directly set a key code for the graphical code and save the key code when the graphical code is a new one.

In an embodiment, the control module may be configured to, after the key code for the graphical code is set, determine whether there is another click event with respect to the touch screen to be added; if yes, re-enter the setting mode; otherwise, exit the setting mode and operate by taking account of the added click event.

In an embodiment, the control module may be configured to, after exiting the setting mode, detect in real time whether there is a subsequent click operation on the touch screen of the terminal, acquire, upon detection of the subsequent click operation on the touch screen, coordinate values corresponding to all contact points within a clicking region where the subsequent click operation is performed, convert, all coordinate values resulted from the subsequent click operation into a graphical code, using the preset encoding algorithm, and determine an event to be executed according to the key code corresponding to the graphical code.

In an embodiment, the control module may be configured to check whether the graphical code already exists, determine the event to be executed according to the key code corresponding to the graphical code when the graphical code already exists; or otherwise, extract, a coordinate value corresponding to a midpoint of all of the coordinate values resulted from the subsequent click operation, as an operation position of the subsequent click operation, determine a current click event corresponding to the subsequent click operation according to a duration, starting position and ending position of the detected click operation on the touch screen, and determine the event to be executed according to an key code corresponding to the current click event.

By means of the method and device for adding a click event with respect to a touch screen provided by the embodiment of the disclosure, a setting mode is entered, coordinate values are acquired corresponding to all contact points within a clicking region where a click operation detected by the touch screen is performed, a graphical code is acquired using a preset encoding algorithm, and a key code is set for the graphical code. In this way, the click event to be added can be set; furthermore, since a new click event is defined using a single click operation, there is no need to determine a current click event according to a duration, starting position and ending position of a detected click operation as in the prior art, thus simplifying touch screen operations, improving convenience of the touch screen operations and improving operation experiences for a user using the touch screen.

### BRIEF DESCRIPTION OF THE DRAWINGS

Fig. 1 is a schematic flow chart of a method for adding a click event with respect to a touch screen according to an embodiment of the disclosure;
Fig. 2 is a schematic diagram of a pattern on a finger sticker according to an embodiment of the disclosure; and
Fig. 3 is a schematic structural diagram of a device for adding a click event with respect to a touch screen according to an embodiment of the disclosure.

### DETAILED DESCRIPTION

According to various embodiment of the disclosure, a setting mode is entered; upon detection of a click operation on the touch screen, coordinate values are acquired corresponding to all contact points within a clicking region where the click operation is performed; all coordinate values resulted from the click operation are converted into a graphical code, using a preset encoding algorithm; and a key code is set for the graphical code.

The disclosure will be further elaborated below in combination with accompanying drawings and specific embodiments.

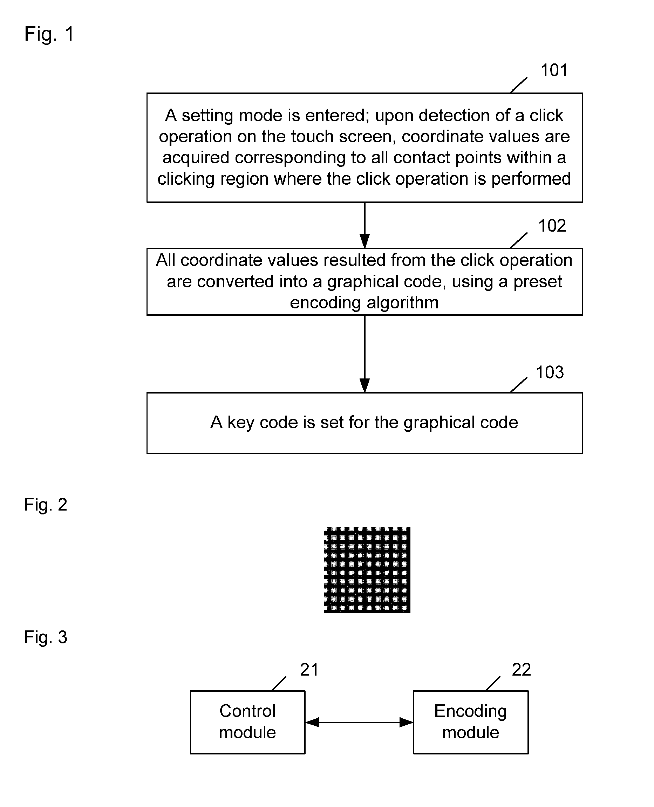

A method for adding a click event with respect to a touch screen provided by the embodiment of the disclosure is as shown in Fig. 1, and the method includes the following steps:

Step 101, a setting mode is entered; upon detection of a click operation on the touch screen, coordinate values are acquired corresponding to all contact points within a clicking region where the click operation is performed.

Here the setting mode is a mode enabled by a user when he/she desires to define a pattern resulted from the click operation.

The touch screen is an existing multi-point touch screen in the prior art; the detection of a click operation on the touch screen belongs to the prior art, and thus detailed description thereof will be omitted herein; and the process that coordinate values are acquired corresponding to all contact points within a clicking region where the click operation is performed belongs to the prior art, and thus detailed description thereof will be omitted herein. The clicking region is a region where a current click is performed.

Before step 101 is executed, the user selects, as desired, a tool for generating a pattern on the touch screen, and then clicks on the touch screen; after that, step 101 is executed.

In an embodiment, the tool for generating a pattern on the touch screen may be a finger sticker, one side of which is adhered to a finger of the user while the other side has bumps representing the pattern, for example, Fig. 2 is a schematic diagram of a pattern on a finger sticker according to an embodiment of the disclosure, wherein black portions represent bumps on the sticker.

Step 102, all coordinate values resulted from the click operation are converted into a graphical code, using a preset encoding algorithm.

Here the conversion to a graphical code includes: all of the acquired coordinate values corresponding to the all contact points within the clicking region where the click operation is performed are encoded, using the preset encoding algorithm, as a matrix, and the matrix is taken as the graphical code.

In an embodiment, the encoding algorithm may be an existing algorithm in the prior art, for example, the encoding algorithm may be as follows: the clicking region on the touch screen is detected, numbers of lateral pixels and longitudinal pixels occupied by the clicking region are taken as the number of rows and columns of the matrix; all of the acquired coordinate values are converted into relative coordinate values in the clicking region; and all of the elements, corresponding to the relative coordinate values, in the matrix are set to 1 while the rest of the elements in the matrix are set to 0.

Step 103, a key code is set for the graphical code.

Specifically, it is determined whether the graphical code already exists, it is determined whether the key code of the graphical code is to be reset when the graphical code already exists, a key code is set for the graphical code and the key code is saved when the key code of the graphical code is to be reset; otherwise, the process is ended; or a key code is directly set for the graphical code and the key code is saved when the graphical code is a new one.

Here the determination of whether the key code of the graphical code is to be reset includes: the user is prompted that the graphical code already exists and the user is prompted to select whether or not to modify the definition of the graphical code, and it is determined, according to the user's selection, whether the key code of the graphical code is to be reset.

The key code is a value for representing an operation, which is specified in the prior art, for example, the terminal can store key codes such as 0x01, 0x02 and 0x04; the process that a key code is set for the graphical code includes: the user selects, according to practical conditions, from all key codes stored in the terminal, one key code as the key code of the graphical code; in an embodiment, all the key codes stored in the terminal may include all in-use key codes in the terminal as well as one or more preset key codes; and the method for presetting key codes belongs to the prior art, and thus detailed description thereof will be omitted.

After completion of above step 103, it is determined, according to practice, whether there is another click event with respect to the touch screen to be added; if yes, a tool for generating a pattern on the touch screen is re-selected for click on the touch screen, and the execution of step 101 is repeated; otherwise, the setting mode is exited and an operation is performed by taking account of the added click event.

Here the process that an operation is performed by taking account of the added click event includes: the terminal detects in real time whether there is a subsequent click operation on its touch screen; upon detection of the subsequent click operation on the touch screen, coordinate values are acquired corresponding to all contact points within a clicking region where the subsequent click operation is performed; all coordinate values resulted from the subsequent click operation are converted into a graphical code, using the preset encoding algorithm, and an event to be executed is determined according to the key code corresponding to the graphical code.

In an embodiment, the encoding algorithm is as same as the preset encoding algorithm in step 102.

The process that an event to be executed is determined according to the key code corresponding to the graphical code includes: it is checked whether the graphical code already exists, the event to be executed is determined according to the key code corresponding to the graphical code when the graphical code already exists; or otherwise, a coordinate value corresponding to a midpoint of all of the coordinate values resulted from the subsequent click operation is extracted, according to the prior art, as an operation position of the subsequent click operation, a current click event corresponding to the subsequent click operation is determined according to a duration, starting position and ending position of the detected click operation on the touch screen, and the event to be executed is determined according to an key code corresponding to the current click event.

The embodiment of the disclosure further provides a device for adding a click event with respect to a touch screen, as shown in Fig. 3, the device includes a control module 21 and an encoding module 22.

The control module 21 is configured to enter a setting mode, acquire, upon detection of a click operation on the touch screen of the terminal, coordinate values corresponding to all contact points within a clicking region where the click operation is performed, transmits all coordinate values resulted from the click operation to the encoding module 22, and set a key code for a graphical code returned from the encoding module 22.

The encoding module 22 is configured to convert, the all coordinate values from the control module 21 into the graphical code, using a preset encoding algorithm, and return the graphical code to the control module 21.

The control module 21 is configured to prompt, through the touch screen of the terminal, the user to select whether or not to enter the setting mode, enter the setting mode according to the user's selection, detect in real time whether there is a subsequent click operation on the touch screen of the terminal, acquire, upon detection of the subsequent click operation on the touch screen, coordinate values corresponding to all contact points within a clicking region where the subsequent click operation is performed.

The encoding module 22 is configured to encode, using the preset encoding algorithm, all of the coordinate values, from the control module 21, corresponding to the all contact points within the clicking region where the click operation is performed as a matrix, and take the matrix as the graphical code.

The control module 21 is configured to determine, after receiving the graphical code from the encoding module 22 during the setting mode, whether the graphical code already exists, determine whether the key code of the graphical code is to be reset when the graphical code already exists, set a key code for the graphical code and save the key code when the key code of the graphical code is to be reset; otherwise, end the process; or directly set a key code for the graphical code and save the key code when the graphical code is a new one.

The control module 21 is configured to, when determining whether the key code of the graphical code is to be reset, prompt the user that the graphical code already exists and prompt the user to select whether or not to modify the definition of the graphical code, and determine, according to the user's selection, whether the key code of the graphical code is to be reset.

The control module 21 is configured to select, according to practical conditions, from all key codes stored in the terminal, one key code as the key code of the graphical code.

The control module 21 is configured to, after the key code for the graphical code is set, determine, according to practical needs, whether there is another click event with respect to the touch screen to be added; if yes, re-select a tool for generating a pattern on the touch screen to click on the touch screen, and re-enter the setting mode; otherwise, exit the setting mode and operate by taking account of the added click event.

The control module 21 is configured to, after exiting the setting mode, detect in real time whether there is a subsequent click operation on the touch screen of the terminal, acquire, upon detection of the subsequent click operation on the touch screen, coordinate values corresponding to all contact points within a clicking region where the subsequent click operation is performed, transmit the detected coordinate values corresponding to the all contact points to the encoding module 22, and determine an event to be executed according to the key code corresponding to the graphical code, which is returned from the encoding module 22.

The control module 21 is configured to, after exiting the setting mode, check, according to the graphical code from the encoding module 22, whether the graphical code already exists, determine the event to be executed according to the key code corresponding to the graphical code when the graphical code already exists; or otherwise, extract, a coordinate value corresponding to a midpoint of all of the coordinate values resulted from the subsequent click operation, as an operation position of the subsequent click operation, determine a current click event corresponding to the subsequent click operation according to a duration, starting position and ending position of the detected click operation on the touch screen, and determine the event to be executed according to an key code corresponding to the current click event.

The above device can be installed into a terminal having a touch screen as a logic module.

What are described above are merely preferable embodiments of the disclosure, and are not intended to limit the scope of protection of the disclosure.

### INDUSTRIAL APPLICABILITY

In the embodiment of the disclosure, a setting mode is entered, coordinate values are acquired corresponding to all contact points within a clicking region where a click operation detected by the touch screen is performed, a graphical code is acquired using a preset encoding algorithm, and a key code is set for the graphical code. In this way, the click event to be added can be set.

Furthermore, since a new click event is defined using a single click operation, there is no need to determine a current click event according to a duration, starting position and ending position of a detected click operation as in the prior art, thus simplifying touch screen operations, improving convenience of the touch screen operations and improving operation experiences for a user using the touch screen.

## Claims

1. A method for adding a click event with respect to a touch screen, comprising:
entering a setting mode;
upon detection of a click operation on the touch screen, acquiring coordinate values corresponding to all contact points within a clicking region where the click operation is performed;
converting, all coordinate values resulted from the click operation into a graphical code, using a preset encoding algorithm; and
setting a key code for the graphical code.

2. The method according to claim 1, wherein the converting all coordinate values resulted from the click operation into a graphical code comprises:
encoding, using the preset encoding algorithm, all of the acquired coordinate values corresponding to the all contact points within the clicking region where the click operation is performed as a matrix, and
taking the matrix as the graphical code.

3. The method according to claim 1, wherein the setting a key code for the graphical code comprises:
determining whether the graphical code already exists;
determining whether the key code of the graphical code is to be reset when the graphical code already exists; setting a key code for the graphical code and saving the key code when the key code of the graphical code is to be reset; otherwise, ending the process; or
directly setting a key code for the graphical code and saving the key code when the graphical code is a new one.

4. The method according to claims 1 or 3, further comprising:
after the setting the key code for the graphical code, determining whether there is another click event with respect to the touch screen to be added; if yes, re-entering the setting mode; otherwise, exiting the setting mode and operating by taking account of the added click event.

5. The method according to claim 4, wherein the operating by taking account of the added click event comprises:
detecting in real time whether there is a subsequent click operation on the touch screen;
upon detection of the subsequent click operation on the touch screen, acquiring coordinate values corresponding to all contact points within a clicking region where the subsequent click operation is performed;
converting, all coordinate values resulted from the subsequent click operation into a graphical code, using the preset encoding algorithm; and
determining an event to be executed according to the key code corresponding to the graphical code.

6. The method according to claim 5, wherein the determining an event to be executed according to the key code corresponding to the graphical code comprises:
checking whether the graphical code already exists;
determining the event to be executed according to the key code corresponding to the graphical code when the graphical code already exists; or
otherwise, extracting, a coordinate value corresponding to a midpoint of all of the coordinate values resulted from the subsequent click operation, as an operation position of the subsequent click operation, determining a current click event corresponding to the subsequent click operation according to a duration, starting position and ending position of the detected click operation on the touch screen, and determining the event to be executed according to an key code corresponding to the current click event.

7. A device for adding a click event with respect to a touch screen of a terminal, comprising a control module and an encoding module,
wherein the control module is configured to enter a setting mode, acquire, upon detection of a click operation on the touch screen, coordinate values corresponding to all contact points within a clicking region where the click operation is performed, transmits all coordinate values resulted from the click operation to the encoding module, and set a key code for a graphical code returned from the encoding module; and
the encoding module is configured to convert, the all coordinate values from the control module into the graphical code, using a preset encoding algorithm, and return the graphical code to the control module.

8. The device according to claim 7,
wherein the encoding module is configured to encode, using the preset encoding algorithm, all of the coordinate values, from the control module, corresponding to the all contact points within the clicking region where the click operation is performed as a matrix, and take the matrix as the graphical code.

9. The device according to claim 8,
wherein the control module is configured to determine, after receiving the graphical code returned from the encoding module during the setting mode, whether the graphical code already exists, determine whether the key code of the graphical code is to be reset when the graphical code already exists, set a key code for the graphical code and save the key code when the key code of the graphical code is to be reset; otherwise, end the process; or directly set a key code for the graphical code and save the key code when the graphical code is a new one.

10. The device according to claim 9,
wherein the control module is configured to, after the key code for the graphical code is set, determine whether there is another click event with respect to the touch screen to be added; if yes, re-enter the setting mode; otherwise, exit the setting mode and operate by taking account of the added click event.

11. The device according to claim 10,
wherein the control module is configured to, after exiting the setting mode, detect in real time whether there is a subsequent click operation on the touch screen of the terminal, acquire, upon detection of the subsequent click operation on the touch screen, coordinate values corresponding to all contact points within a clicking region where the subsequent click operation is performed, convert, all coordinate values resulted from the subsequent click operation into a graphical code, using the preset encoding algorithm, and determine an event to be executed according to the key code corresponding to the graphical code.

12. The device according to claim 11,
wherein the control module is configured to check whether the graphical code already exists, determine the event to be executed according to the key code corresponding to the graphical code when the graphical code already exists; or otherwise, extract, a coordinate value corresponding to a midpoint of all of the coordinate values resulted from the subsequent click operation, as an operation position of the subsequent click operation, determine a current click event corresponding to the subsequent click operation according to a duration, starting position and ending position of the detected click operation on the touch screen, and determine the event to be executed according to an key code corresponding to the current click event.
